Europäisches Patentamt

European Patent Office

Office européen des brevets

(11) Veröffentlichungsnummer: **0 314 698**
**B1**

(19)

(12) **EUROPÄISCHE PATENTSCHRIFT**

(45) Veröffentlichungstag der Patentschrift: **27.06.90**

(51) Int. Cl.⁵: **B 62 D 5/04**

(21) Anmeldenummer: **87904690.2**

(22) Anmeldetag: **14.07.87**

(86) Internationale Anmeldenummer:
**PCT/EP87/00380**

(87) Internationale Veröffentlichungsnummer:
**WO 88/00545 28.01.88 Gazette 88/03**

(54) **HILFSKRAFTLENKUNG, INSBESONDERE FÜR KRAFTFAHRZEUGE.**

(30) Priorität: **19.07.86 PCt/ep86/00426**

(43) Veröffentlichungstag der Anmeldung:
**10.05.89 Patentblatt 89/19**

(45) Bekanntmachung des Hinweises auf die
Patenterteilung:
**27.06.90 Patentblatt 90/26**

(84) Benannte Vertragsstaaten:
**DE FR GB IT SE**

(56) Entgegenhaltungen:
**EP-A- 141 626**
**WO-A-87/02631**
**WO-A-87/02632**

(73) Patentinhaber: **ZAHNRADFABRIK
FRIEDRICHSHAFEN AKTIENGESELLSCHAFT
Löwentaler Strasse 100 Postfach 2520
D-7990 Friedrichshafen 1 (DE)**

(72) Erfinder: **LANG, Armin
Rheinstrasse 10
D-7070 Schwäbisch Gmünd (DE)**

(74) Vertreter: **Raue, Reimund
Zahnradfabrik Friedrichshafen AG Löwentaler
Strasse 100 Postfach 2520
D-7990 Friedrichshafen 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft eine Hilfskraftlenkung, insbesondere für Kraftfahrzeuge, nach dem Oberbegriff des Anspruches 1.

Eine derartige Hilfskraftlenkung ist bekannt aus der EP 01 01 579 A2. Bei dem Ausführungsbeispiel nach Fig. 8 dieser Druckschrift ist zwischen dem Elektromotor und dem Lenkgetriebe eine elektromagnetische Kupplung angeordnet. Die Kupplung soll immer dann den Motor von dem Lenkgetriebe trennen, wenn der Motor nicht mit Strom versorgt wird. Dadurch wird erreicht, daß bei einem Stromausfall die Lenkung rein mechanisch betätigt werden kann, ohne daß der Elektromotor mitgeschleppt werden müßte. Die bekannte Einrichtung bringt keine Sicherheit, wenn eine Störung in der Drehmoment-Meßeinrichtung oder in dem elektronischen Steuerkreis auftritt. Eine solche Störung könnte beispielsweise darin bestehen, daß in der Drehmoment-Meßeinrichtung ein scheinbares Drehmoment wahrgenommen und der Elektromotor angetrieben wird, obwohl an dem Lenkhandrad gar nicht gedreht wird. Dadurch würde das Fahrzeug bei Geradeausfahrt plötzlich ausbrechen. Ein anderer Störfall könnte darin bestehen, daß an dem Lenkhandrad in der einen Richtung gedreht wird, während die elektronische Steuereinrichtung den Elektromotor in die Gegenrichtung antreibt. Auch in diesem Fall würde die Kupplung schließen, so daß der Elektromotor voll auf die Lenkung wirken würde.

Der Erfindung liegt die Aufgabe zugrunde, eine Hilfskraftlenkung zu schaffen, bei der bei einem Störfall der Elektromotor kein unerwünschtes Drehmoment auf die Lenkung ausüben kann.

Diese Aufgabe wid durch die im Anspruch 1 gekennzeichnete Hilfskraftlenkung gelöst. Vorteilhafte und zweckmäßige Ausgestaltungen sind in den Unteransprüchen angegeben.

Durch die zusätzliche Anordnung eines redundanten Sicherheitskreises neben dem Steuerkreis und die Anordnung einer zweiten Drehmoment-Meßeinrichtung, die das Motordrehmoment mißt, kann die Plausibilität der beiden Momente überprüft und im Störungsfall das Trennglied geöffnet werden. Eine Fehlsteuerung des Elektromotors wird verhindert.

Auf besonders einfache Weise läßt sich die Sicherheitsschaltung dadurch erreichen, daß die Sicherheitseinrichtung des Sicherheitskreises zwei Signalausgänge aufweist, von denen bei einem störungsfreien Betrieb der Lenkung jeweils einer über die beiden Schalter der Schalteinrichtung zur Betätigung der Kupplung bzw. des Trennschalters verwendet wird. Die beiden Schalter sind wechselweise von der zweiten Drehmoment-Meßeinrichtung betätigbar. Zweckmäßigerweise handelt es sich dabei um mechanisch betätigbare Schalter.

Durch die unterschiedlichen Höhen der Ansprechschwellen der Sicherheitseinrichtung und der Steuereinrichtung wird erreicht, daß das Trennglied schließt, bevor der Motor anläuft bzw. das Signal zum Anlaufen bekommt.

Um einen Störfall in der Sicherheitseinrichtung rechtzeitig erkennen zu können, ist zwischen den beiden Signalausgängen eine Überwachungseinrichtung in der Form eines UND-Gliedes angeordnet. Dadurch wird dann eine Anzeigeeinrichtung betätigt, wenn beide Signalausgänge ein Drehmomentsignal liefern.

Um die Sicherheitsredundanz noch weiter zu erhöhen, ist zwischen dem Steuerkreis und dem Sicherheitskreis eine elektronische Überwachungseinrichtung angeordnet, durch die die Signale der beiden Kreise miteinander verglichen werden und bei unterschiedlichen Werten der Drehmomentsignale der Steuerkreis und/oder die Kupplung abgeschaltet werden.

Im folgenden wird die Erfindung anhand mehrerer in der Zeichnung dargestellter Ausführungsbeispiele näher erläutert. Es zeigt

Fig. 1 eine schematische Darstellung der erfindungsgemäßen Hilfskraftlenkung in einem ersten Ausführungsbeispiel mit einer Kupplung,

Fig. 2 ein zweites Ausführungsbeispiel der Hilfskraftlenkung mit einem Trennschalter anstelle der Kupplung,

Fig. 3 einen Block-Schaltplan des Steuerkreises mit der Zuordnung von Lenkgetriebe und Elektromotor gemäß einem dritten Ausführungsbeispiel,.

Fig. 4 einen Block-Schaltplan des Sicherheitskreises.

Der mechanische Teil der Hilfskraftlenkung enthält ein Lenkgetriebe 1, z. B. ein Zahnstangen-Lenkgetriebe, dessen Primärteil von einem Ritzel 2 und dessen Sekundärteil von einer Zahnstange 3 gebildet wird. Das Ritzel 2 ist über eine Lenkspindel 4 mit einem Lenkhandrad 5 verbunden. Die Zahnstange 3 ist in bekannter Weise über ein Lenkgestänge 6 mit den zu lenkenden Fahrzeugrädern 7 verbunden.

In die Lenkspindel 4 ist eine Drehmoment-Meßeinrichtung 8 eingebaut. An die Drehmoment-Meßeinrichtung 8 ist ein Steuerkreis 9 angeschlossen, der ein erstes Ausgangssignal X1 aus der Drehmoment-Meßeinrichtung 8 erhält. Der Steuerkreis 9 enthält eine elektronische Steuereinrichtung 10.

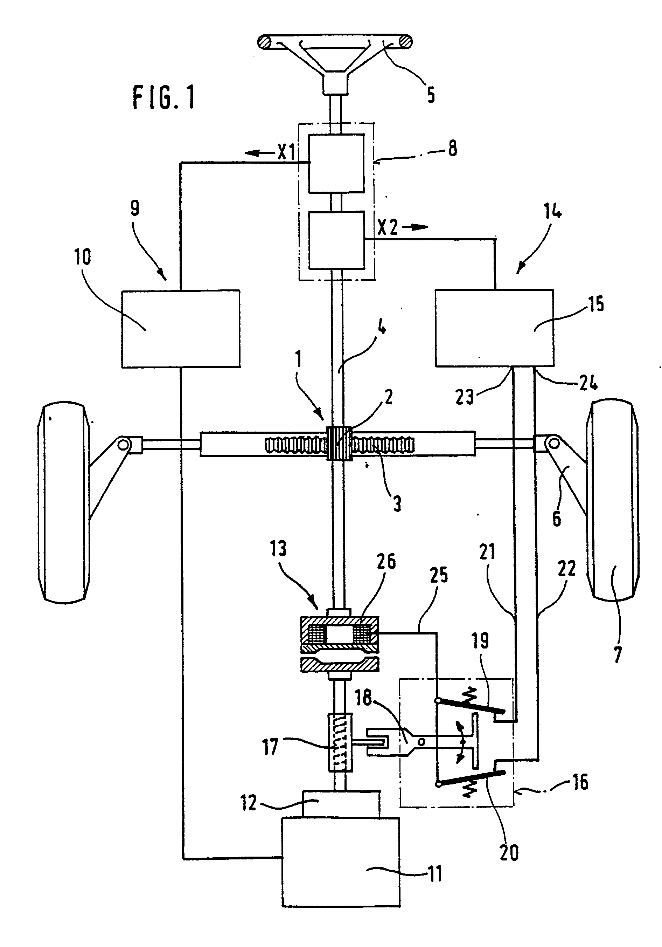

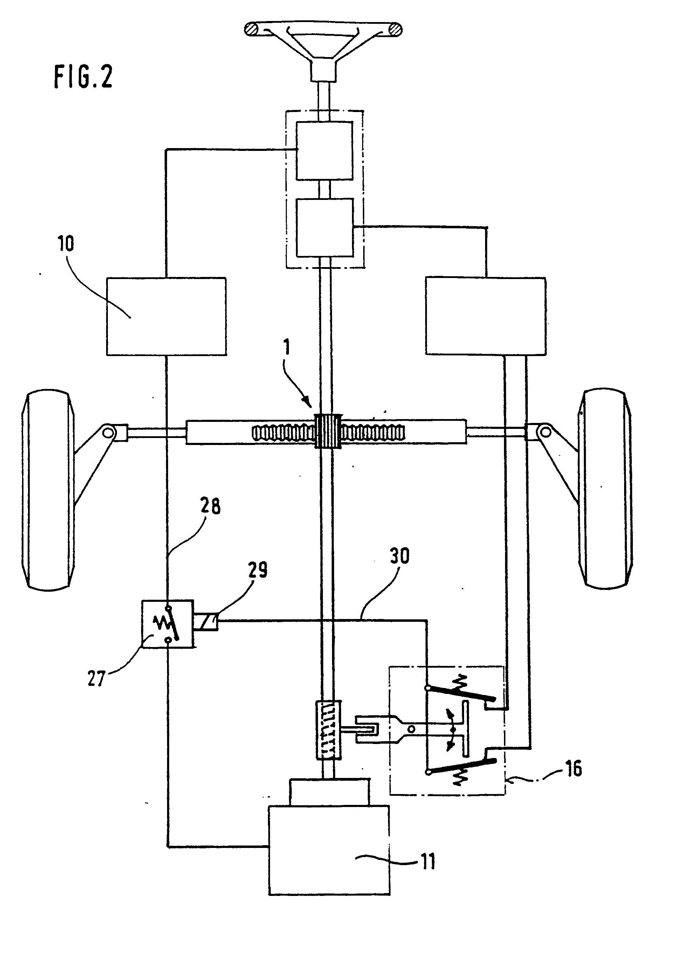

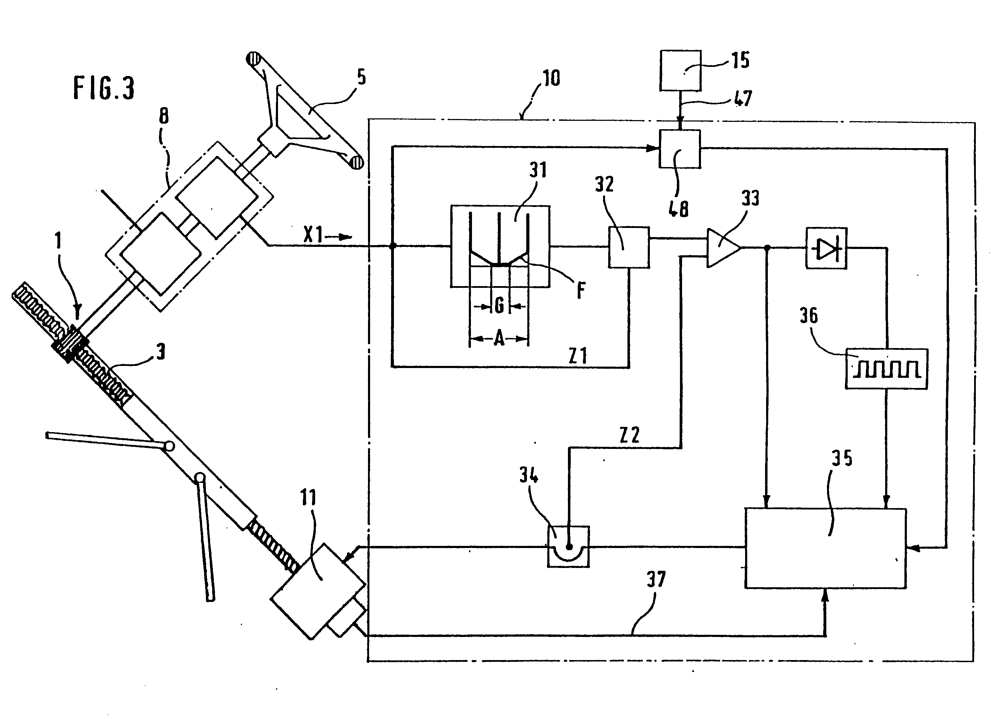

Durch den Steuerkreis 9 wird ein Elektromotor 11 gesteuert, der über ein Getriebe 12 an ein Teil des Lenkgetriebes 1 angeschlossen werden kann. In den Ausführungsbeispielen der Fig. 1 und 2 wirkt der Elektromotor 11 auf das Primärteil, das Ritzel 2, des Lenkgetriebes 1. In dem Ausführungsbeispiel der Fig. 3 wirkt der Elektromotor 11 auf das Sekundärteil, die Zahnstange 3, des Lenkgetriebes 1.

Zwischen dem Elektromotor 11 und dem Lenkgetriebe 1 ist eine Kupplung 13 angeordnet. Die Kupplung 13 wird durch einen redundanten Sicherheitskreis 14 gesteuert, entsprechend einem zweiten Ausgangssignal X2 der ersten Drehmoment-Meßeinrichtung 8 Der Sicherheitskreis 14 enthält eine Sicherheitseinrichtung 15 und eine Schalteinrichtung 16. In dem Antriebsstrang zwischen dem Elektromotor 11 und dem Lenkgetriebe 1 ist eine zweite Drehmoment-Meßeinrichtung 17 zur Messung des Drehmoments des Elektromotors 11 angeordnet. Mit der zweiten Drehmoment-Meßeinrichtung 17 ist ein Schaltteil 18 verbunden, das vorzugsweise auf mechanischem Wege zwei in der Schalteinrichtung 16 enthaltene Schalter 19 und 20 betätigen kann. Die beiden Schalter 19 und 20 sind einerseits über zwei Leitungen 21 und 22 des Sicherheitskreises 14 an zwei Signalausgänge 23 bzw. 24 der Sicherheitseinrichtung 15 und andererseits über eine gemeinsame Leitung 25 an eine Magnetspule 26 der Kupplung 13 angeschlossen. Die Schalter 19 und 20 sind in ihrer Neutralstellung geschlossen.

In dem Ausführungsbeispiel nach Fig. 2 ist das Trennglied durch einen Trennschalter 27 gebildet, der die Kupplung 13 ersetzt. Der Elektromotor 11 ist dann direkt mit dem Ritzel 2 des Lenkgetriebes 1 verbunden. Der Trennschalter 27 ist in einer Leitung 28 angeordnet, die von der Steuereinrichtung 10 zu dem Elektromotor 11 führt. Der Trennschalter 27 wird durch eine Magnetspule 29 über eine Leitung 30 von der Schalteinrichtung 16 gesteuert. Der übrige Aufbau entspricht dem des Ausführungsbeispieles der Fig. 1.

Gemäß Fig. 3 wird bei einer Betätigung des Lenkhandrades 5 das erste Ausgangssignal X1 der ersten Drehmoment-Meßeinrichtung 8 einem Kennlinienformer 31 in der Steuereinrichtung 10 zugeführt. Dieser formt das Drehmomentsignal X1 so um, daß an seinem Ausgang erst dann ein Signal ansteht, wenn eine bestimmte Grenzkraftschwelle G überwunden wird. Ist diese Schwelle erreicht, so steigt mit ansteigendem Drehmoment das Signal Y in dem Fahrbereich F an. Übersteigt das Drehmoment eine bestimmte Größe A, so steigt das Signal Y sehr steil an, man befindet sich im Abschneidebereich. Diese Kennlinie entspricht der Kennlinie "Servodruck als Funktion des Betätigungsmomentes am Lenkhandrad" einer normalen hydraulischen Hilfskraftlenkung.

In dem an den Kennlinienformer 31 anschließenden Sollwert-Bilder 32 wird mit Hilfe der Rechts/Links-Information Z1 der ersten Drehmoment-Meßeinrichtung 8 in obiger Kennlinie der 2. Quadrant in den dritten Quadranten verlagert, wodurch man einen Sollwert mit Drehrichtungsinformation erhält. Dieser Sollwert wird dann durch einen Ist-/Sollwert-Vergleicher 33 mit dem durch einen Stromsensor 34 gemessenen Strom-Istwert-Signal Z2 des Servomotors 11 verglichen.

Der Ausgang des Ist-/Sollwert-Vergleichers steuert eine Leistungsendstufe 35, die wegen des besseren Wirkungsgrades zweckmäßigerweise nach dem Prinzip der Pulslängenmodulation 36 arbeitet. Bei Verwendung eines kollektorlosen Elektromotors 11 wird die Rotorstellung des Elektromotors 11 mit Hilfe einer Leitung 37 auf die Leistungsendstufe 35 zurückgeführt. Diese Rückführung kann bei Verwendung eines Gleichstrommotors mit Kollektor entfallen.

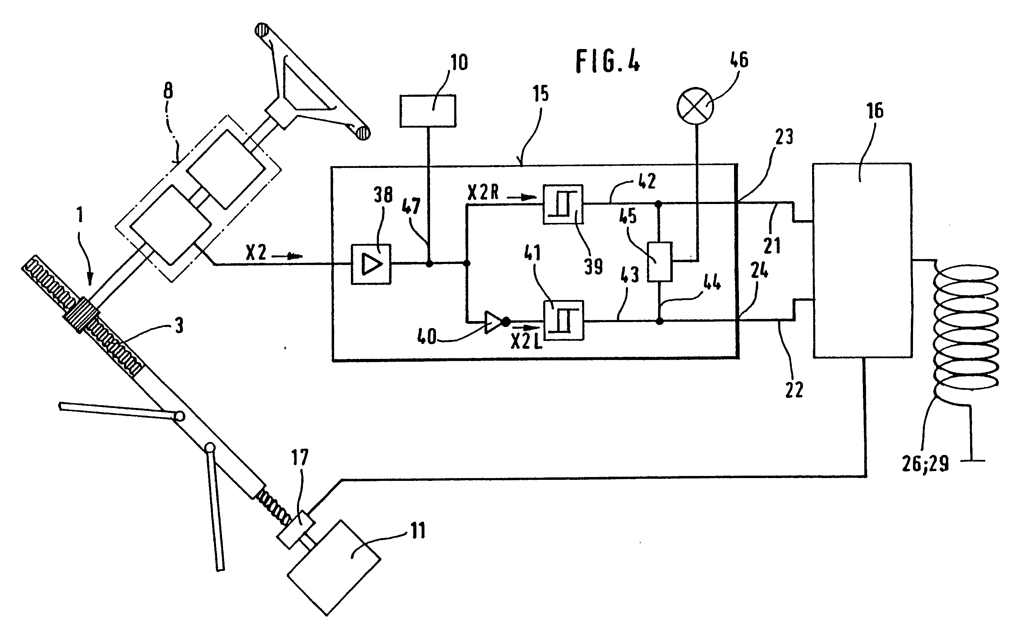

In Fig. 4 ist der Aufbau der Sicherheitseinrichtung 15 im einzelnen dargestellt. Das zweite Ausgangssignal X2 der Drehmoment-Meßeinrichtung 8 wird durch einen Verstärker 38 verstärkt. Danach teilt sich der Signalpfad. Die positiven Signale X2R bei einem rechtsdrehenden Moment am Lenkhandrad 5 werden unmittelbar einem rechten Schmitt-Trigger 39 und die negativen Signale X2L bei einem linksdrehenden Moment nach dem Durchlaufen eines Inverters 40 einem linken Schmitt-Trigger 41 zugeführt. Das jeweilige Signal wird von dem Schmitt-Trigger 39 bzw. 41 dem jeweiligen Signalausgang 23 bzw. 24 zugeleitet. Von den Signalausgängen 23 und 24 führen die Leitungen 21 und 22 zu der Schalteinrichtung 16. Die Signale X2R und X2L werden erst nach Überschreiten der durch die Schmitt-Trigger 39 und 41 festgelegten Ansprechschwelle der Sicherheitseinrichtung 15 an die Signalausgänge 23 bzw. 24 weitergeleitet.

Zwischen den Verbindungsleitungen 42 und 43 von den Schmitt-Triggern 39 bzw. 41 zu den Signalausgängen 23 bzw. 24 ist in einer Leitung 44 ein UND-Glied 45 angeordnet. An das UND-Glied 45 ist eine Anzeigeeinrichtung 46, beispielsweise in der Form einer Kontrolleuchte, angeschlossen.

Zur weiteren Erhöhung der Sicherheitsredundanz kann zwischen dem Steuerkreis 9 und dem Sicherheitskreis 14 eine elektronische Überwachungseinrichtung angeordnet sein. Dazu ist zwischen den beiden Kreisen eine Sicherheitsleitung 47 mit einem Vergleicher 48 angeordnet (Fig. 3). Über den Vergleicher 48 kann der Steuerkreis 9 und/oder die Kupplung 13 abgeschaltet werden, wenn ein Störfall vorliegt. Dies ist beispielsweise dann der Fall, wenn die Signale der beiden Kreise 9 und 14 unterschiedliche Richtungen aufweisen.

Im folgenden wird die Funktion der erfindungsgemäßen Hilfskraftlenkung näher beschrieben:

Wird bei störungsfreiem Betrieb an dem Lenkhandrad 5 beispielsweise ein rechtsdrehendes Moment aufgebracht, das unterhalb der Ansprechschwelle G liegt, so gibt die Steuereinrichtung 10 noch keinen Strom an den Elektromotor 11 ab. Auch der Sicherheitskreis 14 spricht noch nicht an, wenn die Schaltschwelle des Schmitt-Triggers 39 noch nicht erreicht ist. Die Folge ist, daß die Kupplung 13 bzw. der Trennschalter 27 geöffnet bleibt.

Wird die Ansprechschwelle des Schmitt-Triggers 39 überschritten, so wird zunächst die Kupplung 13 bzw. der Trennschalter 27 geschlossen. Überschreitet das Lenkmoment auch noch die Ansprechschwelle G der Steuereinrichtung 10, so wird ein entsprechend dem Drehmoment ansteigender Strom zu dem Elektromotor 11 geliefert, der dann über das Getriebe 12 ein rechtsdrehendes Moment (bei Verbindung mit dem Ritzel 2) bzw. eine vergleichbare Kraft (bei Verbindung mit der Zahnstange 3) auf das Lenkgetriebe 1 ausübt und dadurch das Drehmoment am Lenkhandrad 5 entsprechend entlastet. Das rechtsdrehende Motormoment bewirkt über die zweite Drehmoment-Meßeinrichtung 17 ein Öffnen des Schalters 20, was jedoch in diesem Fall keinen Einfluß auf die Funktion hat.

Bei entgegengesetztem Drehmoment am Lenkhandrad 5 oder bei einer Einleitung einer Kraft an der Zahnstange 3 verhält sich die Anordnung entsprechend. Aus einer Kraft an der Zahnstange ergibt sich ein auf die Lenkspindel 4 einwirkendes Drehmoment, das den Elektromotor 11 in die entgegengesetzte Richtung steuert, so daß einen Gegenkraft gegen die an der Zahnstange 3 eingeleitete Kraft erzeugt wird.

Bei einem Störfall in dem elektrischen Steuerkreis 9 kann es beispielsweise vorkommen, daß am Lenkhandrad 5 ein rechtsdrehendes Moment eingeleitet wird, während am Elektromotor 11 ein linksdrehendes Moment entsteht. In diesem Fall öffnet der Schalter 19. Die erste Drehmoment-Meßeinrichtung 8 liefert als zweites Ausgangssignal X2 ein Signal für das rechtsdrehende Moment auf der Leitung 21. Da der zu dieser Leitung 21 gehörende Schalter 19 jedoch geöffnet ist, bleibt die Magnetspule 26 bzw. 29 stromlos. Damit wird eine Fehlsteuerung des Elektromotors 11 verhindert. Gleichzeitig wird der Fahrer durch die fehlende Unterstützung gewarnt.

Ein anderer Störfall tritt auf, wenn der Elektromotor 11 durch einen Defekt in der Steuereinrichtung 10 plötzlich ein Signal zum Anlaufen erhält, ohne daß ein entsprechendes Drehmoment am Lenkhandrad 5 vorhanden ist. Da in diesem Fall ein von der ersten Drehmoment-Meßeinrichtung 8 erzeugtes Ausgangssignal X2 fehlt, bleiben beide Signalausgänge 23 und 24 der Sicherheitseinrichtung 15 stromlos, so daß auch über die Leitungen 21 und 22 der Schalteinrichtung 16 kein Signal zum Schließen der Kupplung 13 bzw. des Trennschalters 27 erfolgt. Dadurch kann kein störendes Moment auf das Ritzel 2 übertragen werden bzw. der Elektromotor 11 erst gar nicht anlaufen.

Dreht der Elektromotor 11 durch eine Störung in dem Steuerkreis 9 zu schnell, würde er also das Drehmoment am Lenkhandrad 5 gewissermaßen überholen, so entsteht an der ersten Drehmoment-Meßeinrichtung 8 ein entgegendrehendes Moment. Der Vorgang läuft dann ab, wie bei dem oben beschriebenen Störfall, bei dem am Lenkhandrad 5 und am Elektromotor 11 Drehmomente in unterschiedlichen Richtungen gemessen werden. Auch hierbei wird also ein fehlerhafter Antrieb des Ritzels 2 verhindert.

Störfälle, die zu einer gefährlichen Fehlfunktion der Hilfskraftlenkung führen würden, können auch durch einen Ausfall des redundanten Sicherheitskreises 14 nicht auftreten. Bei einem Fehlen von Signalen an beiden Signalausgängen 23 und 24 der Sicherheitseinrichtung 15 wird der Elektromotor 11 von dem Lenkgetriebe 1 abgekuppelt bzw. die Stromversorgung zu dem Elektromotor 11 durch den Trennschalter 27 unterbrochen. Die Hilfskraftlenkung arbeitet dann wie eine normale mechanische Lenkung.

Sind dagegen an einem oder beiden der Signalausgänge 23 und 24 Signale ständig vorhanden, dann arbeitet die Lenkung über den Steuerkreis 9, der dann allerdings nicht mehr überwacht wird. Bei einem derartigen Störfall liegen aber wenigstens kurzzeitig an beiden Signalausgängen 23 und 24 Steuersignale vor, so daß beide Verbindungsleitungen 42 und 43 wenigstens kurzzeitig gleichzeitig unter Spannung stehen. In diesem Fall spricht das UND-Glied 45 an und die Anzeigeeinrichtung 46 signalisiert eine Störung des Systems.

Bezugszeichen
1 Lenkgetriebe
2 Ritzel
3 Zahnstange
4 Lenkspindel
5 Lenkhandrad
6 Lenkgestänge
7 Fahrzeugrad
8 Erste Drehmoment-Meßeinrichtung
9 Steuerkreis
10 Steuereinrichtung
11 Elektromotor
12 Getriebe
13 Kupplung
14 Sicherheitskreis
15 Sicherheitseinrichtung
16 Schalteinrichtung
17 Zweite Drehmoment-Meßeinrichtung
18 Schaltteil
19 Schalter
20 Schalter
21 Leitung
22 Leitung
23 Signalausgang
24 Signalausgang
25 Leitung
26 Magnetspule
27 Trennschalter
28 Leitung
29 Magnetspule
30 Leitung
31 Kennlinienformer
32 Sollwert-Bilder
33 Ist-/Sollwert-Vergleicher
34 Stromsensor
35 Leistungsendstufe
36 Pulslängenmodulation
37 Leitung
38 Verstärker
39 Schmitt-Trigger
40 Inverter
41 Schmitt-Trigger
42 Verbindungsleitung
43 Verbindungsleitung
44 Leitung
45 UND-Glied
46 Anzeigeeinrichtung
47 Sicherheitsleitung
48 Vergleicher
X1 Signal
X2 Signal
X2R Positives Signal
X2L Negatives Signal
Y Signal
Z1 Rechts/Links-Information
Z2 Strom-Istwert-Signal

**Patentansprüche**

1. Hilfskraftlenkung, insbesondere für Kraftfahrzeuge, mit einem die Handlenkung unterstützenden Elektromotor (11), der an ein Teil (2, 3) eines Lenkgetriebes (1) angeschlossen ist, mit einer Drehmoment-Meßeinrichtung (8) zum Messen eines an einem Lenkhandrad (5) ausgeübten Drehmoments, mit einem eine elektronische Steuereinrichtung (10) enthaltenden Steuerkreis (9) zur Steuerung des Elektromotors (11) entsprechend einem Ausgangssignal (X1) der Drehmoment-Meßeinrichtung (8), dadurch gekennzeichnet,

daß ein zweiter Kreis vorgesehen ist als redundanter, eine Sicherheitseinrichtung (15) und eine Schalteinrichtung (16) enthaltender Sicherheitskreis (14) für die Steuerung eines der Zu- und Abschaltung des Elektromotors (11) dienenden Trenngliedes (13, 27) entsprechend einem zweiten Ausgangssignal (X2) der Drehmoment-Meßeinrichtung (8),

daß eine zweite Drehmoment-Meßeinrichtung (17) zur Messung des Drehmoments des Elektromotors (11) in dem Antriebsstrang zwischen dem Elektromotor (11) und dem Lenkgetriebe (1) angeordnet ist, und

daß die Schalteinrichtung (16) des Sicherheitskreises (14) das Trennglied (13, 27) immer dann öffnet, wenn die von der ersten und der zweiten Drehmoment-Meßeinrichtung (8, 17) gemessenen Drehmomente unterschiedliche Richtungen aufweisen.

2. Hilfskraftlenkung nach Anspruch 1, dadurch gekennzeichnet, daß das Trennglied eine Kupplung (13) ist, die zwischen dem Elektromotor (11) und einem Teil (2, 3) des Lenkgetriebes (1) angeordnet ist.

3. Hilfskraftlenkung nach Anspruch 1, dadurch gekennzeichnet, daß das Trennglied ein elektrisch betätigbarer Trennschalter (27) ist, der in einer von der Steuereinrichtung (10) zu dem Elektromotor (11) führenden Leitung (28) angeordnet ist.

4. Hilfskraftlenkung nach Anspruch 1, dadurch gekennzeichnet,

daß die Sicherheitseinrichtung (15) einen Signaleingang und zwei Signalausgänge (23, 24) aufweist,

daß für jede Richtung der von der ersten Drehmoment Meßeinrichtung (8) gemessenen Drehmomente einer der Signalausgänge (23, 24) ein Steuersignal für die Betätigung des Trenngliedes (13, 27) liefert und

daß die Schalteinrichtung (16) des Sicherheitskreises (14) zwei, je mit einem der Signalausgänge (23, 24) in Verbindung stehende Schalter (19, 20) aufweist, die im drehmomentfreien Zustand der zweiten Drehmoment-Meßeinrichtung (17) geschlossen sind und wobei der eine oder der andere Schalter (19, 20) je nach der Richtung eines in der zweiten Drehmoment-Meßeinrichtung (17) gemessenen Drehmomentes aufsteuerbar ist.

5. Hilfskraftlenkung nach Anspruch 4, dadurch gekennzeichnet, daß die Schalter (19, 20) der Schalteinrichtung (16) mechanisch von der zweiten DrehmomentMeßeinrichtung (17) betätigbar sind.

6. Hilfskraftlenkung nach Anspruch 1, dadurch gekennzeichnet, daß die Steuereinrichtung (10) und die Sicherheitseinrichtung (15) unterschiedliche Ansprechschwellen besitzen, wobei die Ansprechschwelle der Sicherheitseinrichtung (15) unterhalb der Ansprechschwelle der Steuereinrichtung (10) liegt.

7. Hilfskraftlenkung nach Anspruch 4, dadurch gekennzeichnet, daß die Sicherheitseinrichtung (15) eine Überwachungseinrichtung enthält, die in der Form eines UND-Gliedes (45) zwischen den beiden Signalausgängen (23, 24) derart geschaltet ist, daß eine Anzeigeeinrichtung (46) betätigt wird, wenn beide Signalausgänge (23, 24) signalführend sind.

8. Hilfskraftlenkung nach Anspruch 1, dadurch gekennzeichnet, daß zwischen dem Steuerkreis (9) und dem Sicherheitskreis (14) eine elektronische Überwachungseinrichtung (48) angeordnet ist, die den Steuerkreis (9) und/oder die Kupplung (13) abschaltet, wenn die Signale der beiden Kreise wenigstens hinsichtlich ihrer Richtung unterschiedliche Werte aufweisen.

**Revendications**

1. Servodirection, notamment pour véhicules à moteur comportant un moteur électrique (11) assistant une direction manuelle et relié à une partie (2, 3) d'un mécanisme de direction (1), un dispositif de mesure de couple (8) pour mesurer un couple exercé sur un volant à main (5), et un circuit de commande (9) comportant un dispositif électronique de commande (10) pour commander le moteur électrique (11) en fonction d'un signal de sortie (X1) du dispositif de mesure de couple (8), caractérisée:

en ce qu'un second circuit est prévu en guise de circuit redondant de sécurité (14) comportant un dispositif de sécurité (15) et un dispositif de commutation (16) pour commander, en fonction d'un second signal de sortie (X2) du dispositif de mesure de couple (8), un organe de coupure (13, 27) servant à enclencher et déclencher le moteur électrique (11),

en ce qu'un second dispositif de mesure decouple (17) est disposé sur la transmission reliant le moteur électrique (11) au mécanisme de direction (1), pour mesurer le couple du moteur électrique (11), et

en ce que le dispositif de commutation (16) du circuit de sécurité (14) ouvre toujours ledit organe de coupure (13, 27) quand les couples mesurés respectivement par le premier et le second dispositif de mesure de couple (8, 17) sont de sens différents.

2. Servodirection selon la revendication 1, caractérisée en ce que l'organe de coupure est un embrayage (13) disposé entre le moteur électrique (11) et une partie (2, 3) du mécanisme de direction (1).

3. Servodirection selon la revendication 1, caractérisée en ce que l'organe de coupure est un coupe-circuit (27) à commande électrique, disposé sur une ligne (28) allant du dispositif de commande (10) au moteur électrique (11).

4. Servodirection selon la revendication 1, caractérisée:

en ce que le dispositif de sécurité (15) comporte une entrée et deux sorties (23, 24) de signaux,

en ce que, pour chaque sens des couples mesurés par le premier dispositif de mesure de couple (8), l'une desdites sorties de signaux (23, 24) délivre un signal de commande pour l'actionnement de l'organe de coupure (13, 27), et

en ce que le dispositif de commutation (16) du circuit de commande (14) comporte deux interrupteurs (19, 20) raccordés chacun à l'une des sorties de signaux (23, 24) et qui sont fermés quand le second dispositif de mesure de couple (17) n'indique pas de couple, l'un ou l'autre des dix interrupteurs (19, 20) étant actionné selon le sens d'un couple mesuré dans le second dispositif de mesure de couple (17).

5. Servodirection selon la revendication 4, caractérisée en ce que lesdits interrupteurs (19, 20) du dispositif de commutation (16) sont agencés pour être actionnés mécaniquement par le second dispositif de mesure de couple (17).

6. Servodirection selon la revendication 1, caractérisée en ce que le dispositif de commande (10) et le dispositif de sécurité (15) présentent des seuils de réponse différents, le seuil de réponse du dispositif de sécurité (15) étant inférieur au seuil de réponse du dispositif de commande (10).

7. Servodirection selon la revendication 4, caractérisée en ce que le dispositif de sécurité (15) comporte un dispositif de surveillance sous la forme d'un élément logique ET (45) raccordé aux deux sorties de signaux (23, 24) de manière qu'un dispositif d'affichage (46) soit actionné quand les deux sorties de signaux (23, 24) délivrent des signaux.

8. Servodirection selon la revendication 1, caractérisée en ce qu'un dispositif électronique de surveillance (48) est disposé entre le circuit de commande (9) et le circuit de sécurité (14) et est agencé pour déclencher le circuit de commande (9) et/ou l'embrayage (13) quand les signaux des deux circuits ont des valeurs qui diffèrent au moins par leur sens.

**Claims**

1. A power-assisted steering system, more particularly for motor vehicles, comprising an electric motor (11), which assists the manual steering and is connected to a part (2, 3) of a steering gear (1), a torque measuring device (8) for measuring a torque exerted on a steering wheel (5), and a control circuit (9) containing an electronic control device (10) for controlling the electric motor (11) as a function of an output signal (X1) of the torque measuring device (8), characterised in that

a second circuit is provided as a redundant safety circuit (14) containing a safety device (15) and a switching device (16) for controlling a separating element (13, 27) for switching the electric motor (11) on and off as a function of a second output signal (X2) of the torque measuring device (8),

a second torque measuring device (17) for measuring the torque of the electric motor (11) is arranged in the driving line between the electric motor (11) and the steering gear (1), and

the switching device (16) of the safety circuit (14) opens the separating element (13, 27) whenever the directions of the torque measured by the first and second torque measuring devices (8, 17) differ.

2. A power-assisted steering system according to claim 1, characterised in that the separating element is a coupling (13), which is arranged between the electric motor (11) and a part (2, 3) of the steering gear (1).

3. A power-assisted steering system according to claim 1, characterised in that the separating element is an electrically operated circuit breaker (27), which is arranged in a line (28) leading from the control device (10) to the electric motor (11).

4. A power-assisted steering system according to claim 1, characterised in that

the safety device (15) comprises a signal input and two signal outputs (23, 24),

for each direction of the torque measured by the first torque measuring device (8), one of the signal outputs (23, 24) supplies a control signal for actuating the separating element (13, 27) and

the switching device (16) of the safety circuit (14) comprises two switches (19, 20), which are connected with one of the signal outputs (23, 24) in each case and which are closed in the torque-free state of the second torque measuring device (17), the first or second switch (19, 20) being activated depending on the direction of the torque measured in the second torque measuring device (17).

5. A power-assisted steering system according to claim 4, characterised in that the switches (19, 20) of the switching device (16) can be mechanically actuated by the second torque measuring device (17).

6. A power-assisted steering system according to claim 1, characterised in that the control device (10) and the safety device (15) have different response thresholds, the response threshold of the safety device (15) lying below the response threshold of the control device (10).

7. A power-assisted steering system according to claim 4, characterised in that the safety device (15) contains a monitoring device, which is connected in the form of an AND-element (45) between the two signal outputs (23, 24) in such a manner that a display device (46) is actuated when both signal outputs (23, 24) conduct signals.

8. A power-assisted steering system according to claim 1, characterised in that arranged between the control circuit (9) and the safety circuit (14) is an electronic monitoring device (48), which switches off the control circuit (9) and/or the coupling (13) when the signals of the two circuits comprise different values at least in respect of their direction.

EP  0 314 698  B1

FIG.1

FIG.2

FIG.3

FIG.4

EP 0 314 698 B1